# EUROPEAN PATENT SPECIFICATION

(11) **EP 4 684 338 B1**
(45) Date of publication and mention of the grant of the patent: **18.11.2026**
(21) Application number: 24721280.6
(22) Date of filing: 21.03.2024
(51) Int. Cl.: G06Q 10/0875

(54) **SYSTEMS AND METHODS OF RECLAMATION OF THERMAL MANAGEMENT FLUIDS**
SYSTEME UND VERFAHREN ZUR RÜCKGEWINNUNG VON WÄRMEMANAGEMENTFLÜSSIGKEITEN
SYSTÈMES ET PROCÉDÉS DE RÉCLARATION DE FLUIDES DE GESTION THERMIQUE

(30) Priority: 23.03.2023 US 202363454232 P
(43) Date of publication of application: 28.01.2026
(60) Divisional application: 26210468.0
(73) Proprietor: The Chemours Company FC, LLC, Wilmington, Delaware 19801 (US)
(72) Inventor: PENG, Sheng, Hockessin, Delaware 19707 (US); ALLGOOD, Charles Clinton, Elkton, Maryland 21921 (US); STASIO, Anthony F., Newark, Delaware 19711 (US); SUN-BLANKS, Jian, Guntersville Road Arab, Alabama 35016 (US); DIXON, Natalie Anne, Wilmington, Delaware 19809 (US); BACHMAN, James Edward, Greenville, South Carolina 29601 (US)
(74) Representative: Abitz & Partner
(86) International application number: PCT/US2024/020853
(87) International publication number: WO 2024/197116

(56) References cited:
- CA-A1- 2 893 273
- JP-A- 2021 529 853
- US-A1- 2014 156 454
- US-A1- 2021 301 189

## Description

### CROSS REFERENCE TO RELATED APPLICATIONS

This application claims priority to U.S. Provisional Application No. 63/454,232, filed on March 23, 2023.

### FIELD OF DISCLOSURE

The present disclosure relates to systems and methods of reclamation of thermal management fluids, more specifically, systems and methods of reclamation of used refrigerants employing financial attribute.

### BACKGROUND OF THE INVENTION

It is now widely recognized and accepted that release into the atmosphere of chlorofluorocarbon (CFC)-based and hydrochlorofluorocarbon (HCFC)-based refrigerants has a deleterious effect on the ozone layer that surrounds the Earth. Production of CFC-based and HCFC-based refrigerants have been curtailed recently, and the cost of refrigerant for service purposes has increased. It has therefore become standard practice in the refrigeration system service industry to recover, recycle and reuse the refrigerant in the refrigeration system under service, or to recover, store and reclaim the refrigerant for later reuse, rather than merely to vent such refrigerant into the atmosphere and replace with new refrigerant as has been common practiced in the past.

The U.S. Environmental Protection Agency (EPA) states that refrigerant reclamation is the re-processing and upgrading of a substance through such mechanisms as filtering, drying, distillation and chemical treatment. This is done to restore the substance to a specified standard of performance, such as, Air Conditioning, Heating, and Refrigeration Institute (AHRI) Standard 700 of purity. Refrigerant reclamation can only be performed by a trained and experienced EPA-certified refrigeration technician, as the mishandling of these refrigerant gases can result in further depletion of the ozone layer. Thus, the technician is expected to use proper equipment and capture a certain percentage of the old gas. Further, the EPA provides a list of EPA-certified refrigerant reclaimers/facilities across the country. This means that these reclaimers/facilities are approved to re-process used refrigerant to at least the purity level as specified in the Code of Federal Regulations. AHRI also works with many participants in the industry to ensure that the standards that reclaimers are expected to achieve are well defined and support the highest level of integrity so technicians can be confident in the materials they are using and installing.

Accordingly, the recovered refrigerant can be recycled and reused if the refrigerant is not contaminated. Typically, the non-contaminated refrigerant can be taken back to a consolidator (e.g., a refrigerant manufacturer, supplier, wholesale distributor, or refrigerant recovery company) for disposition, credit, destruction or exchange. If, on the other hand, the refrigerant is contaminated, the refrigerant is sent to a reclamation facility. At this phase, the recovered refrigerant is reprocessed by a licensed facility to industry standard AHRI 700 to match that of a virgin product.

There is a need in the art for convenient and easy-to-use systems and methods that efficiently offer an incentive or financial credit for the used non-contaminated refrigerant to customers, while also tracking the disposition of the refrigerant after it has been reclaimed and removed from the reclamation facility and accounting for incentives or financial credits offered for the returned non-contaminated refrigerant.

US 2014/156454 A1 discloses computer-based methods and systems, including monitoring refrigerant recycling, tracking the disposition of the refrigerant, and allowing repurchasing of the reclaimed refrigerant. US 2021/301189 A1 refers to process and systems for reclaiming flammable and non-flammable hydrofluoro-olefin containing refrigerants. JP 2021 529853 A relates to a process of preparing CFC blend containing one or more recovered hydrofluorocarbon compounds.

### SUMMARY OF THE INVENTION

In an example embodiment, a method of managing refrigerant reclamation includes returning used refrigerant to a facility for reclamation; identifying, via an analyzer unit, the type of the used refrigerant; analyzing, via the analyzer unit, the composition of the used refrigerant; determining, via the analyzer unit, purity of the used refrigerant; generating an analysis report based on the composition of the used refrigerant; determining weight of the used refrigerant based on the purity of used refrigerant; and generating a deposit credit to be used on-site or remotely.

In another example embodiment, a method of a managing a credit for a returned recovered refrigerant includes storing information associated with the returned recovered refrigerant received from an on-site terminal, wherein the information is related to quality of the returned recovered refrigerant and an amount of credit corresponding to the quality of the returned recovered refrigerant; receiving, from an user device, purchasing information associated with purchasing a new refrigerant; determining a comparison between the purchasing information and the amount of credit; and initiating a deposit credit if the comparison is below the amount of credit.

In yet another example embodiment, a system includes one or more processors and one or more non-transitory computer readable storage media communicatively coupled to the one or more processors and storing instructions that are executable by the one or more processors to: return used refrigerant to a facility for reclamation; analyze, via an analyzer unit, type and composition of the used refrigerant; determine, via the analyzer unit, purity of the used refrigerant; generate an analysis report based on the composition of the used refrigerant; determine weight of the used refrigerant based on the purity of used refrigerant; and generate a deposit credit to be used on-site or remotely.

In yet another example embodiment, a system includes one or more processors and one or more non-transitory computer readable storage media communicatively coupled to the one or more processors and storing instructions that are executable by the one or more processors to store information associated with the returned recovered refrigerant received from an on-site terminal, wherein the information is related to quality of the returned recovered refrigerant and an amount of credit corresponding to the quality of the returned recovered refrigerant; receive, from a user device, purchasing information associated with purchasing a new refrigerant; determine a comparison between the purchasing information and the amount of credit; and initiate a deposit credit if the comparison is below the amount of credit.

Other features and advantages of the present invention will be apparent from the following more detailed description, taken in conjunction with the accompanying drawings which illustrate, by way of example, the principles of this disclosure.

### BRIEF DESCRIPTION OF THE DRAWINGS

FIG. 1 is a flow diagram of an example process 1 for recovery, recycle, and reclamation of refrigerant, according to an example embodiment.
FIG. 2 is a schematic diagram of a refrigerant management system for reclamation refrigerant, according to an example embodiment.
FIG. 3 is a schematic diagram of components of the refrigerant management system of FIG. 2, according to an example embodiment.
FIG. 4 is a flowchart of illustrating a method for managing used refrigerant at a reclamation facility, according to an example embodiment.
FIG. 5A is a flowchart of illustrating a method for exchanging and banking of used refrigerant gas, in accordance with an example embodiment.
FIG. 5B is a flowchart of illustrating a method for exchanging and banking of used refrigerant gas, in accordance with an example embodiment.
FIG. 6 is a flowchart of illustrating a method of generating a credit from a returned used refrigerant, according to an example embodiment.
FIG. 7 is a schematic diagram of a computer system in accordance with an example embodiment of the present disclosure.

Wherever possible, the same reference numbers will be used throughout the drawings to represent the same parts.

### DETAILED DESCRIPTION OF EXAMPLE EMBODIMENTS

The present disclosure relates to a refrigerant management system and method that can reliably and accurately determine the amount of refrigerant exchanged through a disposal, recycling, or reclamation facility. More specifically, a refrigerant management system encompassing a computer-based refrigerant banking or exchange system and method that will maintain accounts of all refrigerants returned by a user or servicer to a wholesaler or reclamation facility to allow credit toward future purchases of pure (virgin) or reclaimed refrigerant or other regulated gases.

The present refrigerant management system and method can be further configured to perform at least one of the following processes: identify the type of multiple tanks of refrigerant; identify amount of refrigerant in tank; determine gas properties including purity; update the properties of the new refrigerant in the tank; interface and exchange data with existing systems used by refrigerant distributor networks; interface and exchange data with the various existing inventory systems used by regulated companies; maintain and manage a history of the contents for each tank of refrigerant; maintain and manage a history of the location and movements of each tank of refrigerant; track the chain of custody of each tank of refrigerant; account for and distinguish between refrigerant obtained from multiple sources; determine the volume of refrigerant inventory removed or reclaimed after it is expended and/or exhausted; monitor the return of the tanks of recycled or reclaimed refrigerant, if the refrigerant is recycled or reclaimed; provide and obtain information about the refrigerant to different industry sectors controlling the life cycle of the refrigerant (i.e., owners, distributors, wholesalers, regulators, recyclers, etc.); communicate gas properties to remote and local system users; generate customized reports regarding gas properties of each tank of refrigerant; transmit data of content of refrigerant via a computer system (e.g., computer, mobile device, tablet, mobile phone, etc.); create a deposit account via a virtual bank for the unused refrigerant or new reclaimed refrigerant; track the amount for future credit; manage and fulfill regulatory requirements; and others.

The present system is designed to meet the existing need in the art for a refrigerant banking or exchange system by providing computer systems and computer implemented methods that allow for purchasing of new pure refrigerants by deducting an account that contains credit from a previous deposited returned unused refrigerant. Other implementations can include managing compliance with applicable regulatory requirements and industry standards governing refrigerant emissions and disposal by monitoring and verifying the handling, transfer, and chain of custody of refrigerants. In some embodiments disclosed herein, the refrigerant management system for managing the destruction, recycling, or reclamation of one or more refrigerants is a network- or cloud-based system.

The systems and methods are configured to manage information about the refrigerant (and the gas properties of their contents) to increase efficiency of reclaiming of refrigerant and decrease human error during the reclamation service.

The system decreases costs and increases efficiency over existing systems by providing an easy to use, inexpensive refrigerant management system that electronically stores, tracks, validates and compiles and directs users according to regulatory requirements and status information about the refrigerant in a tank maintained in a database, including but not limited to the type of refrigerant, the date of purchase of the refrigerant, purchase order number, receiving department, the volume of refrigerant, the purity of the refrigerant, tank identification number, testing date, location identification, tank size and capacity, tank pressure, amount of refrigerant credited to the customer's account and any other data relevant to the quality, status or custody of the tank, and their contents (with respect to refrigerants, "refrigerant properties" or with respect to gases generally, "gas properties").

Additionally, the refrigerant management system allows users to manage refrigerant reclamation across many facilities and allows regulated companies to assess the availability of refrigerant. The system can also be configured to monitor an amount of credit in an account to purchase future pure refrigerants at a later time, ensuring efficiency and time-saving. The system can further be configured to create a deposit/refund program to incentivize recycling of the unused refrigerant including the containers for service use.

As described herein, the term "recovered refrigerant" or "used refrigerant" describes refrigerant that was removed from refrigeration or air conditioning equipment and stored in an external container without necessarily being tested or processed in any way. Reuse is restricted to the system that it was recovered from, or in any other system owned by the same equipment owner.

As described herein, the term "reclaimed refrigerant" describes refrigerant that has been reprocessed using specialized machinery and tested to meet AHRI Standard 700 purity specifications.

As described herein, the term "recycled refrigerant" describes refrigerant that has been extracted and cleaned for reuse without being tested for compliance with the stringent AHRI Standard 700 purity specifications required for reclaimed refrigerant. Reuse of recycled refrigerant is restricted to the system that it was recovered from, or in any other system owned by the same equipment owner.

In some embodiments, "used thermal fluid", "recovered thermal fluid" and/or "recycled thermal fluid", as used herein, refer to a thermal fluid composition as each is defined above, and optionally further comprising at least one stabilizer, particularly when the thermal fluid composition includes an HFO refrigerant compound, such as R-1234yf. In some embodiments, the stabilizer comprises at least one inhibitor compound that inhibits, if not eliminates, a fluoroethylene from interacting with another compound and forming dimers, oligomers, homopolymers, or polymeric products. In some embodiments, the at least one inhibitor is selected from hydrocarbons such as cyclic monoterpenes (e.g., limonene, pinene, α-pinene, β-pinene, and terpinene); lipophilic organic compounds such as tocopherols (e.g., α-tocopherol) or butylated hydroxytoluene (BHT); phenols or aromatic organic compounds having at least one chemical moiety -C6H4(OH) (e.g., benzene-1,4-diol, 4-methoxyphenol); and mixtures thereof. Specific examples of inhibitor compounds may include at least one member selected from limonene (particularly D-limonene), α-terpinene, pinene, α-pinene, β-pinene, α-tocopherol, butylated hydroxytoluene (BHT), 4-methoxyphenol, benzene-1,4-diol, and mixtures thereof. In one embodiment, the thermal fluid composition of any of a "used thermal fluid", "recovered thermal fluid" and/or "recycled thermal fluid", each as defined above, comprises R-1234yf and at least one stabilizer comprising at least one inhibitor selected from hydrocarbons including at least cyclic monoterpene; lipophilic organic compounds; or phenols, aromatic organic compounds having at least one chemical moiety -C₆H₄(OH), and more particularly selected from limonene (particularly D-limonene), α-terpinene, pinene, α-pinene, β-pinene, α-tocopherol, butylated hydroxytoluene (BHT), 4-methoxyphenol, benzene-1,4-diol, and mixtures thereof.

In another embodiment, the stabilizer comprises an acid scavenger, such as, but not limited to, hindered amines and epoxy compounds such as epoxy butene. In one embodiment, the thermal fluid composition of any of a "used thermal fluid", "recovered thermal fluid" and/or "recycled thermal fluid", each as defined above, comprises at least one refrigerant compound, such as an HFO refrigerant compound, and at least one stabilizer comprising at least one acid scavenger, such as, but not limited to, hindered amines and epoxy compounds such as epoxy butene.

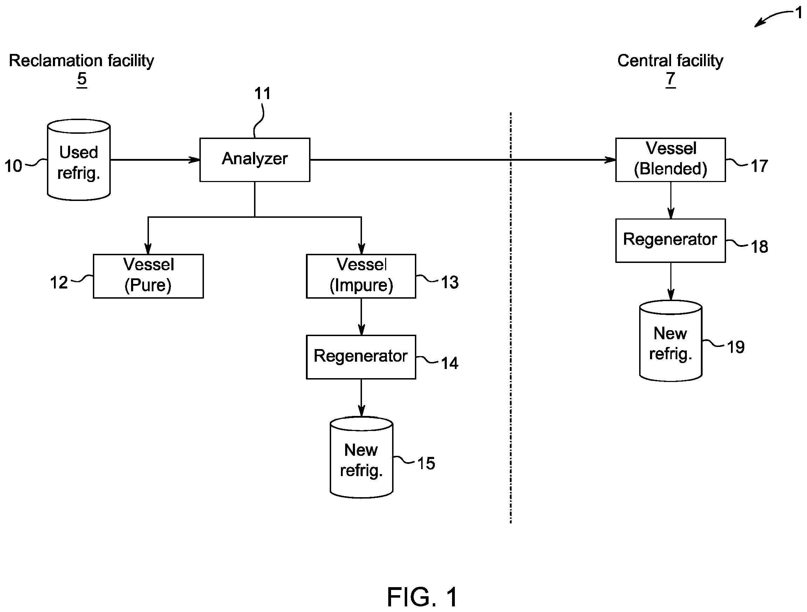

FIG. 1 illustrates a flow diagram of an example process 1 for recovery, recycle, and reclamation of refrigerant, according to an example embodiment. In general, refrigerants are found throughout locations, such as homes, offices, factories, supermarkets, cold storage facilities and the like, in vehicles, and in devices (or equipment) such as refrigerators, air conditioners, air conditioning systems (HVAC), freezers, dehumidifiers and others. Once the refrigerant used by the device is used, no longer needed, or has potentially become contaminated, the refrigerant is recovered and placed in a container. The used refrigerant 10 is then returned to a local reclamation facility 5 where the used refrigerant 10 is analyzed by an analyzer 11 to determine the type of gas and purity as it is being withdrawn from the system. If the gas is determined to be pure (> 99.5%) and of a single type by the analyzer 11, the gas may be collected and transferred to a vessel 12 containing pure gas. In one implementation, the pure gas can be further credited corresponding to an amount to an account based on a weight of the pure gas and optionally deducted from the account at a later time, as will be described in detail later. If, however, there are impurities, particularly non-volatile impurities, such as, oil, water, dirt, and/or acid, found in the gas by the analyzer 11, the gas is transferred and collected into an impurity vessel 13 to be reprocessed by a regenerator 14 for a reclamation process, such as, filtering, separations, distillation, dilution or reformulation of the used refrigerant, and tested to meet Air Conditioning, Heating, and Refrigeration Institute (AHRI) Standard 700 purity specifications. After the reclamation process, the used refrigerant is packed, recertified, and branded as a new reclamation refrigerant 15, matching that of a pure (virgin) gas. Alternatively, if the analyzer 11 determines that the used refrigerant 10 is a blended gas that contains various mixed gases or has a purity of < 99.5%, the used refrigerant 10 is collected into an impurity vessel 17 and transported to a central facility 7 to be reprocessed by a regenerator 18 (via a distillation treatment, for example) at the central facility 7 which can separate the various mixed gases and other processes. The blended gas can thus potentially be separated (e.g., via distillation) into one or more pure gases. After this process, the used refrigerant(s) are packed, recertified, and branded as new reclamation refrigerant(s) 19, each matching that of a pure (virgin) gas that is blended or that of pure gas. In some embodiments, if the gas is determined to have a purity of < 99.5% but greater than 98%, whether of a single type or a blended gas, the gas may optionally be recovered as pure gas as described above. It should be appreciated that contents of the reclamation process can be selectively performed in accordance with a quality such as a degree of deterioration and an amount of impurities detected by the analyzer 11.

In some implementations, the analyzer 11 is an apparatus that analyzes a composition of the refrigerant included in the used refrigerant. In other words, the analyzer 11 can detect the type of refrigerant (e.g., pure or blended), the composition of the refrigerant (e.g., wt.% of individual components), and the amount of impurities (e.g., oil, water, dirt and/or acid) included in the used refrigerant. The analyzer 11 can further determine weight of the refrigerant contained in a container. In one example embodiment, the analyzer 11 can be a portable device or a handheld device, such as an infrared optical sensor. In some implementations, the analyzer 11 can be provided with an inspection sheet that changes color upon contact with a refrigerant and inspected with use of the inspection sheet. The analyzer 11 may further inspect a degree of deterioration of oil such as refrigerating machine oil included in the used refrigerants. These inspections can be performed using known techniques. In some implementations, the analyzer 11 can include a function of printing and outputting a result of analysis on a receipt or the like. For example, the receipt can preferably specify the type and amount of purity of the used refrigerant.

Further, the analyzer 11 can include a computing system (not shown) that can execute an analysis processing and create analysis data including the quality information such as information on appropriateness of impurities, such as oil, water, dirt and/or acid, in the used refrigerant, information on the type of the refrigerant, information on the refrigerant composition of the used refrigerant, and information on the weight of the used refrigerant, and the like. In some implementations, the analysis data can include information in association with a particular facility ID and/or a cylinder ID received from the analyzer 11.

In some implementations, the regenerator 14 is an apparatus that regenerates the recovered used refrigerant to a pure (virgin) refrigerant that meets AHRI Standard 700 purity specifications. The regenerator 14 can include at least a compressor, a separator, a filter dryer, and the like. The regenerator 14 may optionally further include purification equipment, such as a distillation column, for purification of the used refrigerant, for example, to remove unwanted volatile organic impurities which have accumulated in the used gas. In some implementations, the compressor is driven to circulate the recovered used refrigerant in a refrigerant circuit such that a voltage is applied to reduce or remove oil such as the refrigerating machine oil in the recovered used refrigerant. In some implementations, the separator can be a type of oil separator. In some implementations, the filter dryer reduces or removes water and acid included in the recovered used refrigerant circulating in the refrigerant circuit. The regenerator 14 can also determine information on the appropriateness of the oil, water, and acid included in the recovered used refrigerant after the regeneration processing, and compile the refrigerant composition, the weight, and the like.

Further, the regenerator 14 can include a computing system (not shown) that can execute a regeneration processing and create regeneration data including the quality information (information on the appropriateness of oil, moisture, and acid in the regenerated refrigerant, information on the refrigerant composition of the regenerated refrigerant, and information on the weight of the regenerated refrigerant) and information indicating that the regenerated refrigerant has been regenerated. In some implementations, the regeneration data can include information in association with a particular facility ID, a cylinder ID and the like.

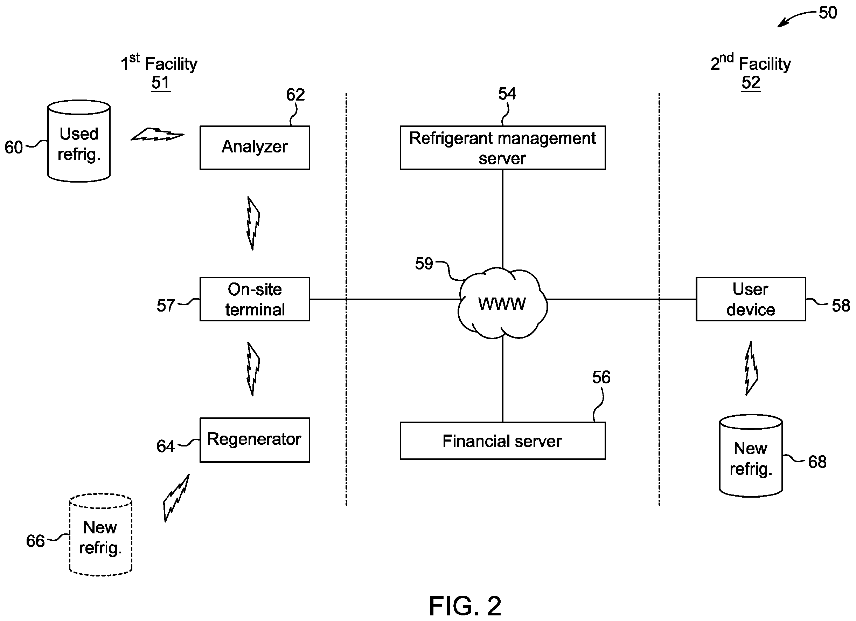

FIG. 2 illustrates a schematic diagram of a refrigerant management system 50 for reclamation of refrigerant according to an example embodiment. The refrigerant management system 50 includes a refrigerant management server 54, a refrigerant financial server 56, an on-site terminal 57 (such as a local device, a mobile device or other devices) at a first facility 51, and a user device 58 (e.g., a mobile device) at a second facility 52, each in communication over a network 59 (e.g., Internet). The network 59 can be a local area or wide area wired or wireless network.

With this system, the used refrigerant 60 can be returned to a first facility 51 (e.g., wholesaler, reclaimer, or distributor) where the used refrigerant 60 is analyzed by an analyzer 62 to determine type, composition and purity of gas. If the gas is determined to be pure (> 99.5%) and of a single type determined by the analyzer 62, the pure gas can be credited to an account corresponding to an amount based on a weight of the pure gas to be used by a customer at a later time and optionally at a different facility, e.g., second facility 52. Accordingly, the system 50 stores the aggregate amount of refrigerant associated with a particular customer account when tanks or refrigerant are returned at the first facility 51. For example, a customer can return the used refrigerant 60 containing a pure refrigerant for credit applied to the customer's "virtual bank" for the returned gas. The customer "virtual bank" is an account managed by the financial server 56 that maintains a total of the refrigerant owed by a given customer that has been returned for storage and later use or resale. The system 50 maintains a total in a virtual bank by crediting a customer's virtual bank account based the weight of each type of pure gas returned, and debiting the appropriate virtual bank account with the weight of each type of pure gas (or reclaimed gas) withdrawn or repurchased at the same facility 51 or at a different facility, e.g., 52. In one implementation, the repurchase or withdrawal of new refrigerant 68 can be implemented by a user device 58 (e.g., mobile phone) via an app or a web-based browser, for example. Additionally, the system 50 can further monitor refrigerant recycling and allow a customer to repurchase reclaimed or recycled refrigerant 66 performed at the first facility 51.

Accordingly, the refrigerant management system 50 as described herein provides a computer-based refrigerant financial or exchange system that can reliably and accurately store the amount of refrigerant exchanged through multiple recycling, reclamation, and disposal transactions. Such a system will maintain accounts of all refrigerants returned by a user or servicer to a reclamation facility to allow credit toward future purchases of pure (virgin) or recycled refrigerant or other regulated gases.

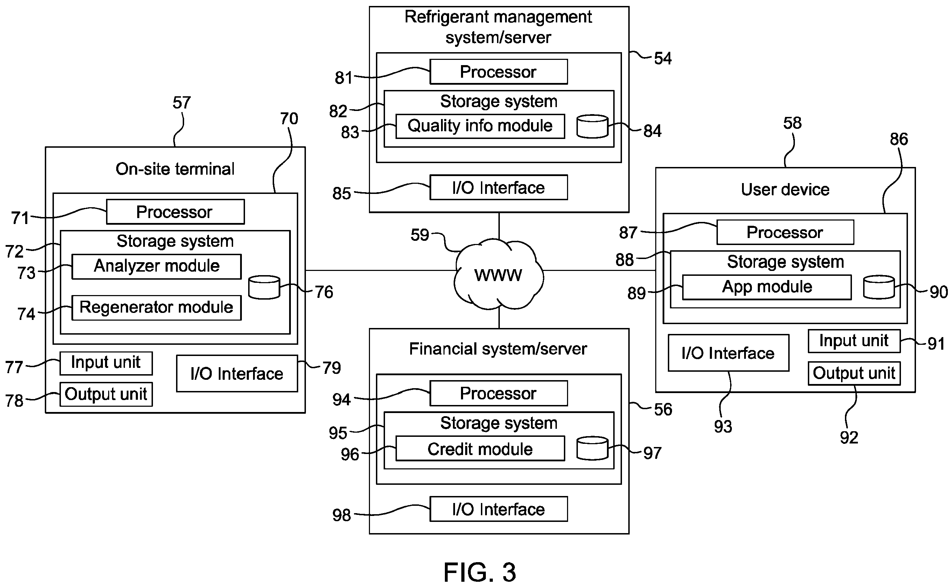

Referring to FIG. 3, the on-site terminal 57 is a device (e.g., a local device, a mobile device, or other devices) located at the first facility 51 (FIG. 2) that can transmit information relating to the used refrigerant recovered from the first facility 51. The on-site terminal 57 includes at least a computing system 70 having a processor 71 and a storage system 72, an input/output interface 79 for communicating with the network 59, an input unit 77, and an output unit 78.

The storage system 72 includes software, including an analyzer module 73, a regenerator module 74, and stored data 76, including data in database structure. The processor 71 loads and executes software, including the analyzer module 73 and/or the regenerator module 74, which are software applications stored in the storage system 72. The processor 71 can also access data stored in the database 76 in order to carry out the methods and control instructions described herein. Although the computing system 70 is shown as a single, unitary system encapsulating one processor 71 and one storage system 72, it should be appreciated that one or more storage systems 72 and one or more processors 71, may comprise the computing system 70, which may be a cloud computing application and system. Similarly, while the analyzer module 73 and the regenerator module 74 are schematically depicted as a single software application contained on a single storage system 72, it is to be recognized that the analyzer module 73 and/or the regenerator module 74 may be implemented as various software instruction sets, or modules, stored at various locations, such as on various storage systems. The processor 71 includes a processor, which may be a microprocessor, a general-purpose central processing unit, an application-specific processor, a microcontroller, or any type of logic device. The processor 71 may also include circuitry for retrieving and executing software, including the analyzer module 73 and the regenerator module 74, from the storage system 72. The processor 71 may be implemented with a single processing device but may also be distributed across multiple processing devices or subsystems that cooperate in executing software instructions.

The analyzer module 73 stored in the storage system 72 processes data associated with quality and/or quantity information of the used refrigerant 60 transmitted from the analyzer 62 (FIG. 2). For example, the analyzer module 73 processes information combining quality information of the used refrigerant associated with the type and amount of purity contained in the used refrigerant. In some implementations, the analyzer module 73 processes information on the amount of impurities (e.g., oil, water, acid, etc.) in the used refrigerant, information on the refrigerant composition of the used refrigerant, information on the weight of the used refrigerant, and the like. In other implementations, the analyzer module 73 processes information associated with the cylinder ID, the customer ID, the facility ID, history information indicating the cylinder use, and the like.

The regenerator module 74 stored in the storage system 72 processes data associated with information transmitted from the regenerator 64 (FIG. 2). In some implementations, the regenerator module 74 processes information relating to the regeneration process to a reclaimed refrigerant. For example, the regenerator module 74 processes information regarding type of regeneration process (e.g., filtering, separations, distillation), type and purity of the reclaimed refrigerant, quality information including information on the appropriateness of oil, water, and acid in the reclaimed refrigerant, information on the refrigerant composition of the reclaimed refrigerant, information on the weight of the reclaimed refrigerant, regeneration history information indicating regenerated or non-regenerated refrigerants, and the like. In other implementations, the regenerator module 74 processes information associated with the cylinder ID, the customer ID, the facility ID, history information indicating the cylinder use, and the like.

The input/output interface 79 is an interface for communicating with the analyzer 62 and the regenerator 64 by any wireless communication protocols or means, such as Bluetooth, Wi-Fi, RF transmission, GPS, ZigBee, Z-Wave, or the like. The input/output interface 79 can also be an interface for communication via the network 59.

In some implementations, the input unit 77 can be a hardware device, for example, a keyboard or a touch panel display for receiving information from the provider in the facility 51. In some implementations, the output unit 78 can be a hardware device, for example, a display for displaying and outputting various information relating to, but not limited to, provider ID, cylinder ID, type and quality of refrigerant, and/or financial information associated with the financial or exchange system, as discussed herein.

The refrigerant management system/server 54 includes a processor 81, a storage system 82, and an input/output interface 85 for communicating with various databases, files, programs, and networks, and/or one or more storage devices. In one implementation, the refrigerant management server 54 includes a refrigerant management system software program that processes requests and responses from the on-site terminal 57 and/or the user device 58. In one implementation, the software program on the refrigerant management server 54 receives information from the on-site terminal 57, performs compilation, and storage functions, and sends information to the user device 58. The refrigerant management server 54 allows the on-site terminal 57 and/or the user device 58 to access various network resources. Any number of on-site terminal(s) 57 or user device(s) 58 can be connected to the refrigerant management server 54 and utilize the system remotely at any given time.

The storage system 82 includes software, including a quality information module 83 and stored data 84, including data in database structure. The processor 81 loads and executes software, including the quality information module 83, which are software applications stored in the storage system 82. The processor 81 can also access data stored in the database 84 in order to carry out the methods and control instructions described herein. Although the refrigerant management server 54 is shown as a single, unitary system encapsulating one processor 81 and one storage system 82, it should be appreciated that one or more storage systems 82 and one or more processors 81, may comprise the refrigerant management server 54, which may be a cloud computing application and system. Similarly, while the quality information module 83 is schematically depicted as a single software application contained on a single storage system 82, it is to be recognized that the quality information module 83 may be implemented as various software instruction sets, or modules, stored at various locations, such as on various storage systems. The processor 81 includes a processor, which may be a microprocessor, a general-purpose central processing unit, an application-specific processor, a microcontroller, or any type of logic device. The processor 81 may also include circuitry for retrieving and executing software, including the quality information module 83, from the storage system 82. The processor 81 may be implemented with a single processing device but may also be distributed across multiple processing devices or subsystems that cooperate in executing software instructions.

The quality information module 83 stored in the storage system 82 processes and stores data of information transmitted from the on-site terminal 57 via network 59. For example, information associated with quality information of the recovered (i.e., used or reclaimed) refrigerant, quality information of the recovered refrigerant associated with the type and amount of purity contained therein, an amount of impurities (e.g., oil, water, acid, etc.) in the recovered refrigerant, a certificate data indicating quality contents (i.e., regeneration certificate data indicating that the regenerated refrigerant is a refrigerant that has been regenerated and conforms to AHRI Standard 700 of purity), and the like. In other implementations, the quality information module 83 processes information associated with the cylinder ID, the customer ID, the facility ID, history information indicating the cylinder use, and the like.

Further, the quality information module 83 can receive the quality information of the non-regenerated refrigerant, i.e., used refrigerant. For example, information on the non-regenerated refrigerant composition, information of the quality of the non-regenerated refrigerant, information on the weight of the non-regenerated refrigerant, information on the appropriateness of oil, water, and acid, the regeneration history information, and the like. When the transaction of the non-regenerated refrigerant is completed, the quality information module 83 can process evaluation information of the transaction of the non-regenerated refrigerant and stores the evaluation information for sale to be processed at a later time. It should be appreciated that since the refrigerant maintenance server 57 handles the evaluation information in the transaction for sale, it is possible to show the reliability of the quality of the non-regenerated refrigerant sold by a provider to the user.

The quality information module 83 can also process information in response to a request received from the user device 58 possessed by the user via the internet 59. In one implementation, upon receipt of information (i.e., the cylinder ID) provided by the user via an app or a web page for purchasing a recovered refrigerant, the quality information module 83 process a searching information, such as the quality information, the regeneration history information, and the like, and transmit the searched information back to the user device 58 via the network 59. The information returned to the user device 58 can include information on the appropriateness of oil, water, and acid of the target recovered refrigerant, information on the refrigerant composition, information on the weight, the regeneration history information, the evaluation information, and the like.

The financial system/server 56 includes a processor 94, a storage system 95, and an input/output interface 98 for communicating with various databases, files, programs, and networks, and/or one or more storage devices. In one implementation, the financial server 56 includes a banking or exchange system software program that processes requests and responses from the on-site terminal 57 and/or the user device 58. In one implementation, the software program on the financial server 56 receives information from the user device 58, performs compilation, and storage functions, and sends financial information to the user device 58. The financial server 56 allows the user device 58 to access various network resources. Any number of user device(s) 58 can be connected to the financial server 56 and utilize the system remotely at any given time.

The storage system 95 includes software, including a credit module 96 and stored data 97, including data in database structure. The processor 94 loads and executes software, including the credit module 96, which are software applications stored in the storage system 95. The processor 94 can also access data stored in the database 97 in order to carry out the methods and control instructions described herein. Although the financial server 56 is shown as a single, unitary system encapsulating one processor 94 and one storage system 95, it should be appreciated that one or more storage systems 95 and one or more processors 94, may comprise the financial server 56, which may be a cloud computing application and system. Similarly, while the credit module 96 is schematically depicted as a single software application contained on a single storage system 95, it is to be recognized that the credit module 96 may be implemented as various software instruction sets, or modules, stored at various locations, such as on various storage systems. The processor 94 includes a processor, which may be a microprocessor, a general-purpose central processing unit, an application-specific processor, a microcontroller, or any type of logic device. The processor 94 may also include circuitry for retrieving and executing software, including the credit module 96, from the storage system 95. The processor 94 may be implemented with a single processing device but may also be distributed across multiple processing devices or subsystems that cooperate in executing software instructions.

The credit module 96 stored in the storage system 95 processes and stores data of information associated with financial transactions of purchasing recovered refrigerants via network 59. For example, information associated with customer ID, account ID, account containing a credit amount, an aggregate total of refrigerant owed to a given customer, weight of each type of pure gas returned, and debiting the appropriate virtual bank account with the weight of each type of pure gas (or reclaimed gas) withdrawn or repurchased, and the like. The credit module 96 further monitors refrigerant recycling and allows a customer to repurchase reclaimed or recycled refrigerant. In operation, the credit module 96 receives the type and amount of gas from the on-site terminal 57. The credit module 96 then credits the customer's virtual bank for the returned unused pure gas received that corresponds to the customer ID with the weight of gas received. Pure gas is credited to a (pure gas) virtual bank of the type of the returned gas. It is known that industry standard refrigerants having a purity above 99.5% are considered pure gases of the given refrigerant type whether that industry standard refrigerant is comprised of single gas or a blended gas.

In other implementations, mixed gas is credited to a (mixed gas) virtual bank including all types of mixed gas. The credit module 96 stores credit in the customer's virtual bank for the gas returned until such time as, e.g., a service request or a customer orders virgin gas or otherwise transfers credit out of that bank. Upon receiving the order, the credit module 96 determines the difference between the amount of gas in the customer's virtual bank and the amount requested in the purchase order. Then the amount is removed from the customer's virtual bank corresponding to the amount of purchased gas. The customer's virtual bank and customer account are maintained until another transaction is initiated.

The user device 58 is a device (e.g., a mobile device, a smartphone, a tablet, a portable computer) possessed by the user who intends to purchase a desired amount of recovered refrigerant from the recovered refrigerants (i.e., regenerated refrigerants and non-regenerated refrigerants). The user device 58 includes at least a computing system 86 having a processor 87 and a storage system 88, an input unit 91, an output unit 92, and an input/output interface 93 for communicating with the network 59.

The storage system 88 includes software, including an app module 89 and stored data 90, including data in database structure. The processor 87 loads and executes software, including the app module 89, which are software applications stored in the storage system 88. The processor 87 can also access data stored in the database 90 in order to carry out the methods and control instructions described herein. Although the computing system 86 is shown as a single, unitary system encapsulating one processor 87 and one storage system 88, it should be appreciated that one or more storage systems 88 and one or more processors 87, may comprise the computing system 86, which may be a cloud computing application and system. Similarly, while the app module 89 is schematically depicted as a single software application contained on a single storage system 88, it is to be recognized that the app module 89 may be implemented as various software instruction sets, or modules, stored at various locations, such as on various storage systems. The processor 87 includes a processor, which may be a microprocessor, a general-purpose central processing unit, an application-specific processor, a microcontroller, or any type of logic device. The processor 87 may also include circuitry for retrieving and executing software, including the app module 89, from the storage system 88. The processor 87 may be implemented with a single processing device but may also be distributed across multiple processing devices or subsystems that cooperate in executing software instructions.

The input/output interface 93 is an interface for communicating by any wireless communication protocols or means, such as Bluetooth, Wi-Fi, RF transmission, GPS, ZigBee, Z-Wave, or the like. The input/output interface 93 can also be an interface for communication via the network 59.

In some implementations, the input unit 91 can be hardware, for example, a keyboard or a touch panel display for receiving information from the user. In some implementations, the output unit 92 can be hardware, for example, a display for displaying and outputting various information relating to, but not limited to, financial information associated with the financial or exchange system, as discussed herein.

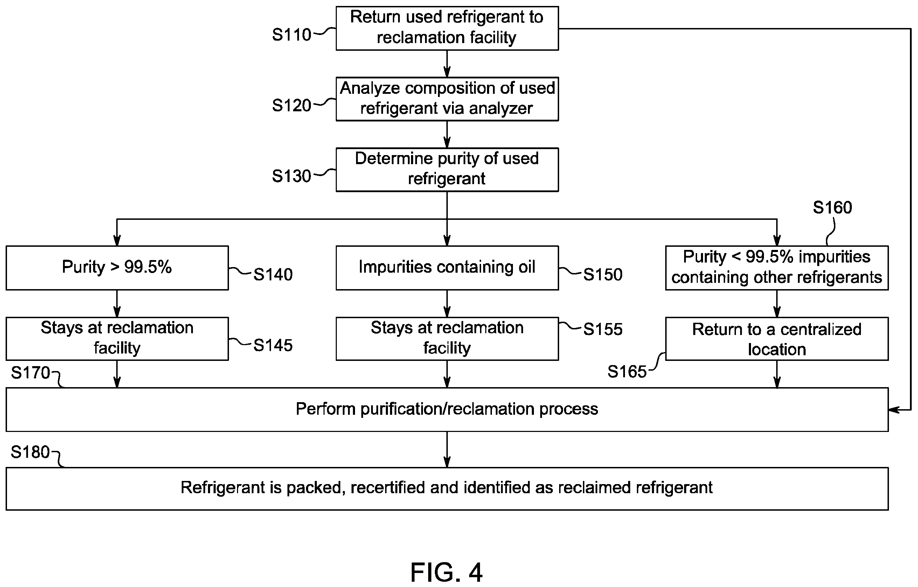

FIG. 4 is a flowchart of illustrating a method for managing used refrigerant at a reclamation facility, in accordance with an example embodiment. The method commences at S110, for example, when a customer or user returns a used refrigerant in a container containing gas to a reclamation facility. If the container is an all-in-one tank containing multiple gases and contaminants, the method proceeds directly to a purification or reclamation process at S170. If the returned used refrigerant is of a single component or a multi-component blend, the method proceeds to step S120 to determine the composition of the returned used refrigerant. The determination of the type and composition of the used refrigerant can be performed by an analyzer, such as, for example, a portable or handheld infrared optical sensor to detect the type (e.g., pure or blended) and the composition (e.g., wt.% of individual components) of the used refrigerant. Then, at S130, the analyzer further performs an analysis of purity of the used refrigerant. In one implementation, the method proceeds in determining whether the purity of the used refrigerant exceeds a threshold (i.e., > 99.5%) to verify if pure (virgin) gas is contained therein, and may proceed in one of three means. At S140, if the used refrigerant is greater than 99.5% purity, the used refrigerant remains at the local reclamation facility at S145 and proceeds to a purification process at S170. For example, the purification process for the used refrigerant determined at S140 may comprise adjusting a ratio for blended mixed gases performed by adding one or more of the individual, pure components as needed to achieve the desired composition, following by at least a drying and a filtering processes, so as to ensure quality of refrigerant meets AHRI Standard 700 purity specifications (i.e., AHRI 700). At S150, if the used refrigerant contains impurities such as oil, water and/or dirt which exceed a threshold amount, the used refrigerant remains at the local reclamation facility at S155 and proceeds to a purification process at S170. For example, the purification process for the used refrigerant determined at S150 can be removing the oil impurities found in the used refrigerants and/or adjusting a ratio for blended mixed gases performed by adding one or more of the individual, pure components as needed to achieve the desired composition, following by a drying and a filtering processes, so as to ensure quality of refrigerant meets AHRI Standard 700 purity specifications (i.e., AHRI 700). At S160, if the used refrigerant does not exceed a threshold (i.e., purity < 99.5%), and contains impurities associated with other gases, the used refrigerant is transferred to a central facility at S165, different than the local reclamation facility and proceeds to a purification process at S170 at the central facility. For example, the purification process for the used refrigerant determined at S160 can be separating the mixed gases and/or adjusting a ratio for blended mixed gases performed by adding one or more of the individual, pure components as needed to achieve the desired composition, following by at least drying, filtering, and distillation processes, so as to ensure quality of refrigerant meets AHRI Standard 700 purity specifications (i.e., AHRI 700). At S180, once the used refrigerant undergoes the purification process, the used refrigerant is packed, recertified, and identified (labeled) as reclaimed refrigerant and sold in the market as pure (virgin) refrigerant. In some embodiments, if the gas is determined to have a purity of < 99.5% but greater than 98%, whether of a single type or a blended gas, the gas may optionally be recovered as pure gas as described above.

In some embodiments, the used thermal fluid, recovered thermal fluid and/or recycled thermal fluid may comprise at least one stabilizer, particularly when the thermal fluid composition includes an HFO refrigerant compound, such as R-1234yf, as described herein.

In some embodiments, particularly when the used thermal fluid, recovered thermal fluid and/or recycled thermal fluid includes at least one HFO refrigerant compound, such as R-1234yf, at any point during the reclamation process, there may further be included a step of adding a stabilizer package to the used thermal fluid, recovered thermal fluid, recycled thermal fluid and/or reclaimed thermal fluid, such as described in U.S. Patent Application Publication No. 2021/0108119. In some embodiments, the stabilizer package includes an effective amount of at least one inhibitor such that the thermal fluid remains substantially free of oligomeric, homopolymeric, or other polymeric products derived from the thermal fluid. In some embodiments, the inhibitor is added as a neat component to the thermal fluid. In some embodiments, the at least one inhibitor is selected from hydrocarbons such as cyclic monoterpenes (e.g., limonene, pinene, α-pinene, β-pinene and terpinene); lipophilic organic compounds such as tocopherols (e.g., α-tocopherol) or butylated hydroxytoluene (BHT); phenols or aromatic organic compounds having at least one chemical moiety -C6H4(OH) (e.g., benzene-1,4-diol, 4-methoxyphenol); and mixtures thereof. Specific examples of inhibitor compounds may include at least one member selected from limonene (particularly D-limonene), α-terpinene, pinene, α-pinene, β-pinene, α-tocopherol, butylated hydroxytoluene (BHT), 4-methoxyphenol, benzene-1,4-diol, and mixtures thereof. In one embodiment, the inhibitor composition includes a liquid at a temperature from about -80°C to about 180°C, about -70°C to about 170°C, and in some cases about -60°C to about 160°C. By "stabilized" it is meant to refer to a composition including an effective amount of at least one inhibitor compound that inhibits, if not eliminates, a fluoroethylene from interacting with another compound and forming dimers, oligomers, homopolymers, or polymeric products.

In some embodiments, the stabilizer package includes an effective amount of at least one acid scavenger. Examples of the acid scavengers that may be included in the present compositions include, but are not limited to, the stabilizers and/or the epoxide component of the stabilizers disclosed in U.S. Patent No. 8,535,555 and the acid scavengers disclosed in International Application Publication No. WO 2020/222864.

In some embodiments, the acid scavenger may comprise one or more epoxides, one or more amines and/or one or more hindered amines, such as, for example but not limited to, epoxybutane.

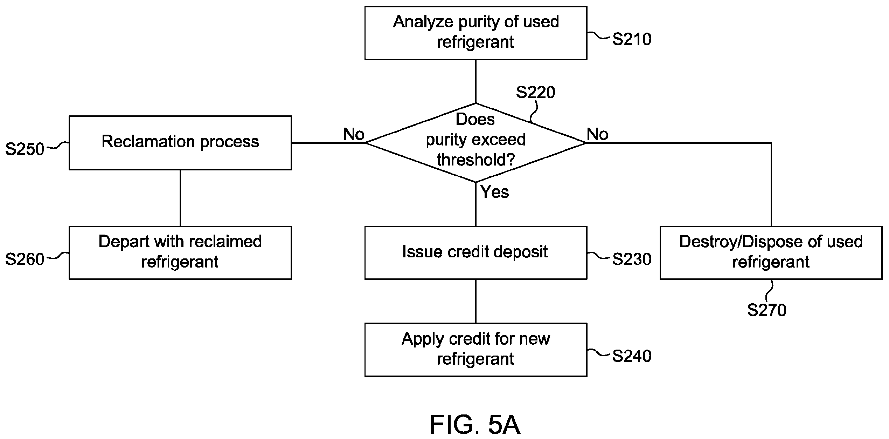

In some embodiments, the inhibitor is premixed with the HFO compound. In some embodiments, the stabilizer package further includes a dye, such as described in International Application Publication No. WO 2023/141098. In some embodiments, the dye is an ultraviolet dye that absorbs light in the ultraviolet or near ultraviolet region of the electromagnetic spectrum. Any compatible dye can be included in the inventive compositions. Appropriate compatible dyes may include, but are not limited to, at least one compound containing a fluorescein species selected from the derivatives of 6-hydroxy-3H-xanthen-3-one and having an absorbance peak from about 425 to about 433 nm, another absorbance peak from about 292 to about 295 nm, and, in some cases, a third absorbance peak from about 243 to about 250 nm. Absorbance peaks may be measured using UV-Vis. Compatible dyes may also be characterized using Fourier-transform infrared (FTIR) spectroscopy as having peaks between about 700 to about 800 cm⁻¹, about 1000 to about 1100 cm⁻¹, about 1200 to about 1300 cm⁻¹, and/or about 1400 to about 1600 cm⁻¹. The amount of dye can range from about 30 to about 0.001 wt%, alternatively about 20 to about 0.001 wt%, alternatively about 5 to about 0.001 wt%, or any value, range, or sub-range therebetween, based on the total weight of the composition. The dye, lubricant, HFO, and inhibitor, among other components of the stabilizer package, can be combined in any suitable sequence. In some embodiments, dye is solubilized in lubricant, followed by addition of HFO containing an inhibitor. In some embodiments, dye is solubilized in lubricant containing inhibitor, followed by addition of HFO.FIG. 5A is a flowchart of illustrating a method for exchanging and banking of used refrigerant gas, in accordance with an example embodiment. The method can be performed, for example, when a customer or user returns a used refrigerant containing gas at a facility (e.g., a wholesaler, a reclamation facility, or a disposal facility). The method begins at S210 where an analyzer analyzes a type and a composition of the refrigerant included in the used refrigerant. For example, the analyzer can detect the type (e.g., pure or blended), the composition (e.g., wt.% of individual components), and the amount of impurities (e.g., oil, water, and acid) included in the used refrigerant. More specifically, the analyzer detects the purity of the used refrigerant. At step S220, the method proceeds in determining whether the purity of the used refrigerant exceeds a threshold (i.e., > 98%), whereby at this percentage, it is considered a pass for issuance of a credit. If, at step S220, the purity is determined to exceed a threshold of 99.5%, the used refrigerant is considered pure gas. The method then at S230 issues a credit to the customer via a virtual bank for the particular gas received based on the weight of gas received. In one implementation, the method stores the credit in the customer's virtual bank for the type and the amount of gas returned until such time as, e.g., a request or a customer orders pure gas or otherwise transfers the credit out of the virtual bank. Upon receiving the request or order, the method at S240 applies the credit by determining the difference between the amount of credit in the customer's virtual bank and the amount requested in the purchase order. At this time, the credit is then removed from the customer's virtual bank. On the other hand, at S220, when the used refrigerant does not exceed a threshold (i.e., > 98%) due to the used refrigerant containing contaminants or other refrigerant gases, the method proceeds to a disposal process to dispose of the used refrigerant at S270. Alternatively, the method may also proceed to a reclamation process S250 to regenerate the used refrigerant, as described in further detail herein. In some implementations, the reclamation process can include a step of adding one or more pure blend components (i.e., make-up components) to bring the mixture into specification, separating process, a filtering process, a drying process, and/or a distillation process. At this stage, once the reclamation process is complete, the user has an option to depart with the reclaimed refrigerant at S260.

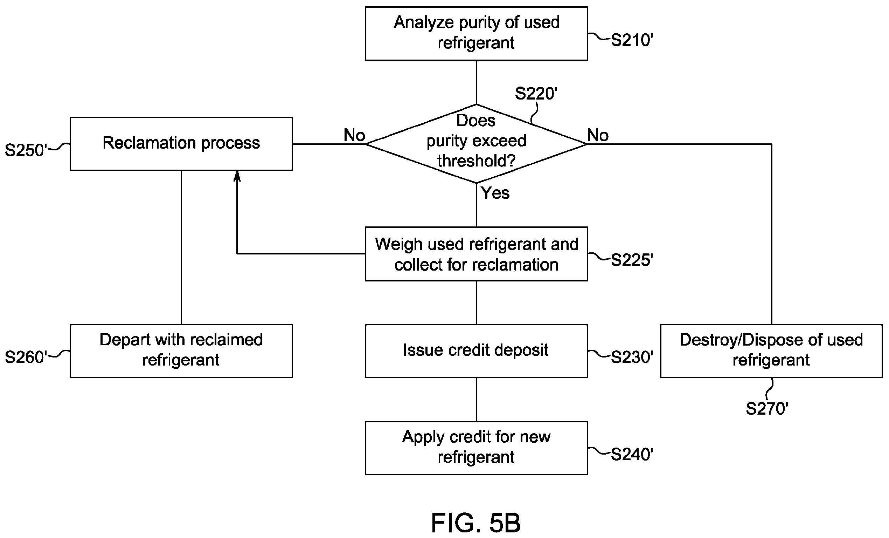

FIG. 5B is a flowchart of illustrating a method for exchanging and banking of used refrigerant gas, in accordance with an example embodiment. The method can be performed, for example, when a customer or user returns a used refrigerant containing gas at a facility (e.g., a wholesaler, a reclamation facility, or a disposal facility). The method begins at S210' where an analyzer analyzes a type and a composition of the refrigerant included in the used refrigerant. For example, the analyzer can detect the type (e.g., pure or blended), the composition (e.g., wt.% of individual components), and the amount of impurities (e.g., oil, water, and acid) included in the used refrigerant. More specifically, the analyzer detects the purity of the used refrigerant. At step S220', the method proceeds in determining whether the purity of the used refrigerant exceeds a threshold (i.e., > 98%), whereby at this percentage, it is considered a pass for issuance of a credit. Next, at step S225', the passed material is weighed. If the returned gas weighs below certain amount (for example only, < 5 lb, < 10 lb, < 20 lb, < 30 lb, < 40 lb, < 50 lb), the customer receives a money credit to their account plus a recovery cylinder. If the returned gas weighs over certain amount (for example only, > 1 ib, > 5 lb, > 10 lb, > 20 lb, > 30 lb, > 40 lb, > 50 lb), the customer receives a credit (e.g., in the form of money and/or free refrigerant) and a recovery cylinder. The free refrigerant can be the same type or different type initially returned to the facility, pursuant to customer preference. Either way, the credit can be issued on site or via a virtual bank for the particular gas received based on the weight of gas received (S230'). The passed material is then sent for reclamation. In one implementation, the method stores the credit in the customer's virtual bank for the type and the amount of gas returned until such time as, e.g., a request or a customer orders pure gas or otherwise transfers the credit out of the virtual bank. Upon receiving the request or order, the method at S240' applies the credit by determining the difference between the amount of credit in the customer's virtual bank and the amount requested in the purchase order. At this time, the credit is then removed from the customer's virtual bank. On the other hand, at S220', when the used refrigerant does not exceed a threshold (i.e., > 98%) due to the used refrigerant containing contaminants or other refrigerant gases, the customer receives a recovery cylinder only. The method proceeds to a disposal process to dispose of the used refrigerant at S270'. Alternatively, the method may also proceed to a reclamation process S250' to regenerate the used refrigerant, as described in further detail herein. In some implementations, the reclamation process can include a step of adding one or more pure blend components (i.e., make-up components) to bring the mixture into specification, separating process, a filtering process, a drying process, and/or a distillation process. At this stage, once the reclamation process is complete, the user has an option to depart with the reclaimed refrigerant at S260'. In one embodiment, the refrigerant in this process is one of the following: R-410A, R-407A, R-407B, R-407C, R-407D, R-407E, R-407F, R-407G, R-407H, or R-404A, R448A, R449A, R513A, R454A, R454B, R454C, R514A, R515B, R444A, R463A.

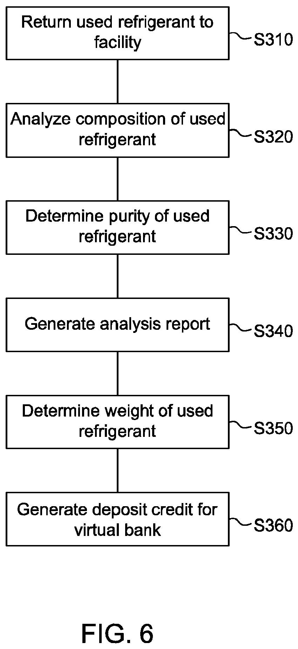

FIG. 6 is a flowchart of illustrating a method of generating a credit from a returned used refrigerant according to an example embodiment. The method commences at S310, for example, when a customer or user returns a used refrigerant containing gas at a facility (e.g., a wholesaler, a reclamation facility, or a disposal facility). Next, at S320, the returned used refrigerant is analyzed via an analyzer to determine a type and composition of the refrigerant included in the used refrigerant. In some implementations, the analyzer can detect the type (e.g., pure or blended), the composition (e.g., type of refrigerant), and the amount of impurities (e.g., oil, water, and acid) included in the used refrigerant. Next, at S330, the method determines, via the analyzer, the purity of the used refrigerant based on the analysis. For example, the method determines whether the purity of the used refrigerant exceeds a threshold (i.e., > 99.5%) to ascertain pure gas. At S340, the method proceeds in generating a customized analysis report regarding gas properties of the returned used refrigerant, i.e., type of gas, single or blend composition, amount, purity level, and the like. In some implementations, the analysis report can include identifying information relating to the facility, the customer, and/or the cylinder including historical data. Next, at S350, the method determines weight of the pure gas contained in a vessel based on the amount of pure gas determined by the analyzer. At S360, the method generates a credit based on the amount of pure gas determined in S350 and deposits the credit via a virtual bank to an account that can optionally be deducted from the account at a later time.

In some implementations, a bar code can be used for purpose of identifying, monitoring, and tracking. For example, the bar code can be placed on the various containers, which will permit identification and tracking of encoded refrigerant transport containers. The bar code may be automatically read by automated bar code reader, or manually scanned, as the containers are processed at the reclamation facility. In some implementations, the bar code can be employed to incentivize return of containers, and a deposit system as used for purchasing refrigerant can be implemented.

As employed herein, various type of refrigerants (single-component and multi-component blends) can be processed for the reclamation process. For example, as stated in AHRI 700-2017, this standard specifies acceptable levels of contaminants (purity requirements) for fluorocarbon, hydrocarbon, and carbon dioxide refrigerants regardless of source and lists acceptable test methods and is applicable whether the refrigerant is present as a single-component or as a component of a blend. These refrigerants are as referenced in the ANSI/ASHRAE Standard 34 with Addenda: Fluorocarbon Refrigerants: R-11; R-12; R-13; R-22; R-23; R-32; R-113; R-114; R-115; R-116; R-123; R-124; R-125; R-134a; R-141b; R-142b; R-143a; R-152a; R-218; R-227ea; R-236fa; R-236ea;R-245fa; R-1132(E); R-1132(Z); R-1132a;R-1233zd(E); R-1233zd(Z); R-1234yf; R-1234ze(E); R-1234ze(Z); VertrelXF; 365mfc; R-1336mzz (E) and R-1336mzz(Z). Single Component Hydrocarbon Refrigerants: R-50; R-170; R-E170; R-290; R-600; R-600a; R-601; R-601a; R-610; R-1150; and R-1270. Carbon Dioxide Refrigerant: R-744. Zeotropic Blend Refrigerants: R-401A; R-401B; R-402A; R-402B; R-403A; R-403B; R-404A; R-405A; R-406A; R-407A; R-407B; R-407C; R-407D; R-407E; R-407F; R-407G; R407H; R-408A; R-409A; R-409B; R-410A; R-410B; R-411A; R-411B; R-412A; R-413A; R-414A; R-414B; R-415A; R-415B; R-416A; R-417A; R-417B; R-417C; R-418A; R-419A; R-419B; R-420A; R-421A; R-421B; R-422A; R-422B; R-422C; R-422D; R-422E; R-423A; R-424A; R-425A; R-426A; R-427A; R-428A; R-429A; R-430A; R-431A; R-434A; R-435A; R-437A; R-438A; R-439A; R-440A; R-442A; R-444A; R-444B; R-445A; R-446A; R-447A; R-447B; R-448A; R-449A; R-449B; R-449C; R-450A; R-451A; R-451B; R-452A; R-452B; R-452C; R-453A; R-454A; R-454B; R-454C; R-471A; R-456A; R-457A; R-458A; R-459A; R-459B; R-460A; R-460B; R-461A; and R-462A Zeotropic Hydrocarbon Blend Refrigerants: R-432A; R-433A; R-433B; R-433C; R-436A; R-436B; R-441A; and R-443A. Azeotropic Blend Refrigerants: R-500; R-502; R-503; R-507A; R-508A; R-508B; R-509A; R-510A; R-511A; R-512A; R-513A; R-513B; R-514A; R-515A; R-515B; and R-516A. 471A; 472A; 472B; 473A;474A;475A; 476A; 474A, 479A.

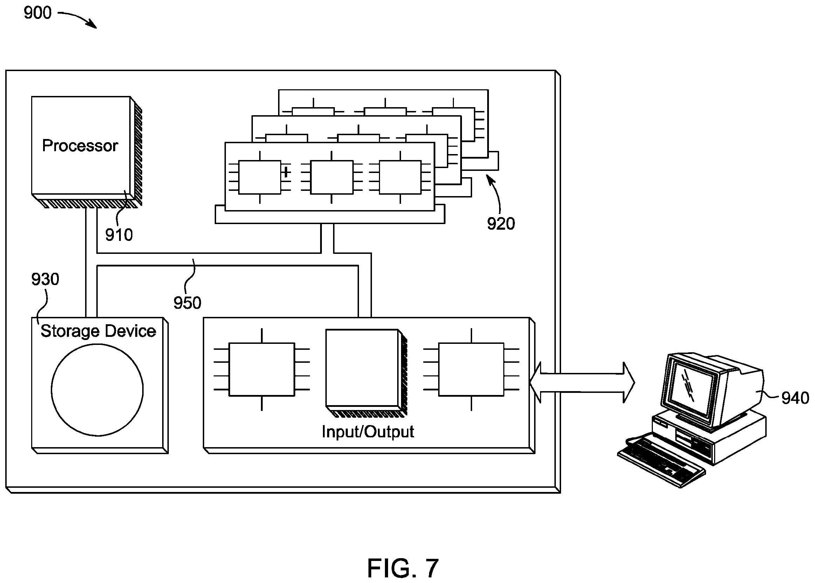

FIG. 7 is a schematic diagram of a computer system 900. The system 900 can be used to carry out the operations described in association with any of the computer-implemented methods described previously, according to some implementations. For example, storage device 930 of system 900 can store instructions that are executable by one or more processing devices 910 to perform operations of the analyzer module 73, the regeneration module 74, the quality information module 82, the credit module 95, and/or the app module 89.

In some implementations, computing systems and devices and the functional operations described in this specification can be implemented in digital electronic circuitry, in tangibly-embodied computer software or firmware, in computer hardware, including the structures disclosed in this specification (e.g., system 900) and their structural equivalents, or in combinations of one or more of them. The system 900 is intended to include various forms of digital computers, such as laptops, desktops, workstations, personal digital assistants, servers, blade servers, mainframes, and other appropriate computers, including vehicles installed on base units or pod units of modular vehicles. The system 900 can also include mobile devices, such as personal digital assistants, cellular telephones, smartphones, and other similar computing devices. Additionally, the system can include portable storage media, such as, Universal Serial Bus (USB) flash drives. For example, the USB flash drives may store operating systems and other applications. The USB flash drives can include input/output components, such as a wireless transducer or USB connector that may be inserted into a USB port of another computing device.

The system 900 includes a processing device or processor 910, a memory 920, a storage device 930, and an input/output device 940. Each of the components 910, 920, 930, and 940 are interconnected using a system bus 950. The processor 910 is capable of processing instructions for execution within the system 900. The processor may be designed using any of a number of architectures. For example, the processor 910 may be a CISC (Complex Instruction Set Computers) processor, a RISC (Reduced Instruction Set Computer) processor, or a MISC (Minimal Instruction Set Computer) processor.

In one implementation, the processor 910 is a single-threaded processor. In another implementation, the processor 910 is a multi-threaded processor. The processor 910 is capable of processing instructions stored in the memory 920 or on the storage device 930 to display graphical information for a user interface on the input/output device 940.

The memory 920 stores information within the system 900. In one implementation, the memory 920 is a computer-readable medium. In one implementation, the memory 920 is a volatile memory unit. In another implementation, the memory 920 is a non-volatile memory unit.

The storage device 930 is capable of providing mass storage for the system 900. In some implementations, storage device 930 is a hardware-based storage device. In one implementation, the storage device 930 is a computer-readable medium. In various different implementations, the storage device 930 may be a floppy disk device, a hard disk device, an optical disk device, or a tape device.

The input/output device 940 provides input/output operations for the system 900. In one implementation, the input/output device 940 includes a keyboard and/or pointing device. In another implementation, the input/output device 940 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier, e.g., in a machine-readable storage device for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random-access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application- specific integrated circuits). The machine learning model can run on Graphic Processing Units (GPUs) or custom machine learning inference accelerator hardware.

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer. Additionally, such activities can be implemented via touchscreen flat-panel displays and other appropriate mechanisms.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include a local area network ("LAN"), a wide area network ("WAN"), peer-to-peer networks (having ad-hoc or static members), grid computing infrastructures, and the Internet. The computer system can include clients and servers. A client and server are generally remote from each other and typically interact through a network, such as the described one. The relationship of client and server arises by virtue of computer programs running on the respective computers and having a client-server relationship to each other.

In some implementations, the present disclosure provides a business model that can be organized regionally. In other words, the business model tailors a specific marketing communication strategy that meets regional needs and brand recognition as well as being able to offer users a good service with sufficient user proximity. In addition, when scaling up the business model, it offers the opportunity to trial and test quicker to finetune the business model.

While this specification contains many specific implementation details, these should not be construed as limitations on the scope of any inventions or of what may be claimed, but rather as descriptions of features specific to implementations of particular inventions. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination falling within the scope of the appended claims.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

While the disclosure has been described with reference to a preferred embodiment, it will be understood by those skilled in the art that various changes may be made, and equivalents may be substituted for elements thereof without departing from the scope of the present disclosure and falling within the scope of the appended claims. In addition, many modifications may be made to adapt a particular situation or material to the teachings of the disclosure without departing from the scope of the appended claims. While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method of managing refrigerant reclamation, comprising:
returning used refrigerant to a facility for reclamation;
identify, via an analyzer unit, type of the used refrigerant;
analyzing, via the analyzer unit, composition of the used refrigerant;
determining, via the analyzer unit, purity of the used refrigerant;
determining weight of the used refrigerant based on the purity of used refrigerant;
based on the type and purity of the used refrigerant, by a single entity, transferring the used refrigerant to a system consisting essentially of: a pure gas collection vessel for storage, an impure gas collection vessel for a reclamation process, or a blended gas collection vessel for an adjusting process; wherein:
if the used refrigerant contains pure gas, the used refrigerant is processed on-site and tested for industry standards,
if the used refrigerant contains non-volatile impurities, the used refrigerant is processed on-site for reclamation and tested for industry standards, and after the reclamation process, the used refrigerant is packed, recertified, and branded as a new reclamation refrigerant, corresponding to a pure gas, and
if the used refrigerant contains blended gas, the used refrigerant is processed on-site or off-site for the adjusting process; and
generating a deposit credit to be used on-site or remotely.

2. The method according to Claim 1, wherein:
(i) if the gas is determined to be pure (> 99.5%) and of a single type by the analyzer unit, the used refrigerant is collected and transferred to [[a]] the pure gass collection vessel containing pure refrigerant;
(ii) if gas is determined to have a purity of greater than 98%, (a) if the weight of the used refrigerant is less than a predetermined threshold, the deposit credit is in the form of money, or (b) if the weight of the used refrigerant is greater than the predetermined threshold, the deposit credit is in the form of money or free refrigerant;
(iii) if the analyzer unit determines that the used refrigerant is a blended gas that contains mixed gases or has a purity of < 99.5%, the used refrigerant is collected into the blended gas collection vessel and transported to a central facility to be reprocessed by a regenerator for adjustment of the mixed gases; or
(iv) if the analyzer unit determines that the used refrigerant has a purity of less than 99.5% but greater than 98%, the used refrigerant is collected and transferred to the impure gas collection vessel containing impure refrigerant.

3. The method according to any of Claims 1-2, wherein the deposit credit is based on a weight of the pure gas.

4. The method according to any of Claims 1-3, wherein the used refrigerant is selected from the group consisting of R-410A, R-407A, R-407B, R-407C, R-407D, R-407E, R-407F, R-407G, R-407H and R-404A. R448A, R449A, R513A, R454A, R454B, and R454C, R514A, R515B, R444A., R463A.

5. The method according to any of Claims 1-4, wherein if the used refrigerant is found by the analyzing unit to contain non-volatile impurities, the used refrigerant is transferred and collected into the impure gas collection vessel to be reprocessed by a regenerator for a reclamation process and tested to meet AHRI Standard 700 purity specifications.

6. The method according to Claim 5, wherein the non-volatile impurities are selected from the group consisting of oil, water, dirt, and acid.

7. The method according to any of Claims 1-6, wherein the analyzer unit is a portable device or a handheld device.

8. The method according to Claim 7, wherein the analyzer unit is an infrared optical sensor.

9. The method according to any of Claims 1-8, further comprising regeneration of the used refrigerant by a regenerator including a computing system configured to execute the regeneration processing and create regeneration data.

10. The method according to Claim 9, wherein the regeneration data is one or more types of information selected from the group consisting of quality of the regenerated refrigerant, refrigerant composition of the regenerated refrigerant, weight of the regenerated refrigerant, and an indication that the regenerated refrigerant has been regenerated.

11. The method according to Claim 10, wherein the quality of the regenerated refrigerant relates to information on the appropriateness of oil, moisture, and acid in the regenerated refrigerant; and/or wherein the regeneration data comprises information in association with a facility **ID** and/or a cylinder ID.

12. The method according to any of Claims 1-11, wherein a bar code is used for purpose of identifying, monitoring, and tracking.

13. The method according to any of Claims 1-12, wherein the used refrigerant comprises at least one stabilizer, more preferably at least one inhibitor compound that inhibits the formation of dimers, oligomers, homopolymers, or polymeric products.

14. The method according to any of Claims 1-13, the method further comprising adding at least one stabilizer to the used refrigerant as part of reclamation of the used refrigerant, the at least one stabilizer being an inhibitor compound that inhibits the formation of dimers, oligomers, homopolymers, or polymeric products.

## Patentansprüche

1. Verfahren zum Verwalten einer Kältemittelrückgewinnung, umfassend:
Zurückführen von verwendetem Kältemittel an eine Anlage zur Rückgewinnung;
Identifizieren, über eine Analyseeinheit, einer Art des verwendeten Kältemittels;
Analysieren, über die Analyseeinheit, einer Zusammensetzung des verwendeten Kältemittels;
Bestimmen, über die Analyseeinheit, einer Reinheit des verwendeten Kältemittels;
Bestimmen eines Gewichts des verwendeten Kältemittels auf Grundlage der Reinheit des verwendeten Kältemittels;
auf Grundlage von der Art und Reinheit des verwendeten Kältemittels, durch eine einzelne Einheit, Überführen des verwendeten Kältemittels in ein System, das im Wesentlichen besteht aus: einem Reingas-Sammelbehälter zur Speicherung, einem Unreingas-Sammelbehälter für einen Rückgewinnungsprozess oder einem Mischgas-Sammelbehälter für einen Anpassungsprozess; wobei:
falls das verwendete Kältemittel reines Gas enthält, das verwendete Kältemittel vor Ort aufbereitet und auf Industriestandards geprüft wird,
falls das verwendete Kältemittel nichtflüchtige Verunreinigungen enthält, das verwendete Kältemittel vor Ort aufbereitet und auf Industriestandards geprüft wird und nach der Rückgewinnungsprozess das verwendete Kältemittel verpackt, neu zertifiziert und als neues Rückgewinnungskältemittel das einem Reingas entspricht, gekennzeichnet wird,
falls das verwendete Kältemittel ein gemischtes Gas enthält, das verwendete Kältemittel vor Ort oder extern für den Anpassungsprozess aufbereitet wird; und
Erzeugen einer Einzahlungsgutschrift, die vor Ort oder aus der Ferne zu verwenden ist.

2. Verfahren nach Anspruch 1, wobei:
(i) falls durch die Analyseeinheit festgestellt wird, dass das Gas rein (> 99,5 %) und von einer einzigen Art ist, das verwendete Kältemittel gesammelt und zu [[a]] dem Reingas-Sammelbehälter, der reines Kältemittel enthält, weitergeleitet wird;
(ii) falls festgestellt wird, dass das Gas eine Reinheit von mehr als 98 % aufweist, (a) falls das Gewicht des verwendeten Kältemittels geringer ist als ein vorbestimmter Schwellenwert, die Einzahlungsgutschrift in Form von Geld erfolgt, oder (b) falls das Gewicht des verwendeten Kältemittels größer ist als der vorbestimmte Schwellenwert, die Einzahlungsgutschrift in Form von Geld oder kostenlosem Kältemittel erfolgt;
(iii) falls die Analyseeinheit feststellt, dass das verwendete Kältemittel ein Mischgas ist, das gemischte Gase enthält oder eine Reinheit von < 99,5 % aufweist, das verwendete Kältemittel in dem Mischgas-Sammelbehälter gesammelt und zu einer zentralen Anlage transportiert wird, um durch einen Regenerator zur Anpassung der gemischten Gase wiederaufbereitet zu werden; oder
(iv) falls die Analyseeinheit feststellt, dass das verwendete Kältemittel eine Reinheit von weniger als 99,5 %, aber mehr als 98 % aufweist, das verwendete Kältemittel gesammelt und in den Unreingas-Sammelbehälter, der unreines Kältemittel enthält, überführt wird.

3. Verfahren nach einem der Ansprüche 1-2, wobei die Einzahlungsgutschrift auf einem Gewicht des reinen Gases basiert.

4. Verfahren nach einem der Ansprüche 1 bis 3, wobei das verwendete Kältemittel aus der Gruppe ausgewählt ist, bestehend aus R-410A, R-407A, R-407B, R-407C, R-407D, R-407E, R-407F, R-407G, R-407H und R-404A, R448A, R449A, R513A, R454A, R454B und R454C, R514A, R515B, R444A, R463A.

5. Verfahren nach einem der Ansprüche 1-4, wobei, falls die Analyseeinheit findet, dass das verwendete Kältemittel nichtflüchtige Verunreinigungen enthält, das verwendete Kältemittel in den Unreingas-Sammelbehälter überführt und gesammelt wird, um durch einen Regenerator für einen Rückgewinnungsprozess wiederaufbereitet und auf eine Einhaltung von Reinheitsanforderungen des AHRI-Standards 700 geprüft zu werden.

6. Verfahren nach Anspruch 5, wobei die nichtflüchtigen Verunreinigungen aus der Gruppe ausgewählt sind, bestehend aus Öl, Wasser, Schmutz und Säure.

7. Verfahren nach einem der Ansprüche 1 bis 6, wobei die Analyseeinheit eine tragbare Vorrichtung oder eine handgeführte Vorrichtung ist.

8. Verfahren nach Anspruch 7, wobei die Analyseeinheit ein optischer Infrarotsensor ist.

9. Verfahren nach einem der Ansprüche 1-8, weiter umfassend Regeneration des verwendeten Kältemittels durch einen Regenerator, der ein Computersystem einschließt, das dafür konfiguriert ist, die Regenerationsverarbeitung auszuführen und Regenerationsdaten zu erzeugen.

10. Verfahren nach Anspruch 9, wobei die Regenerationsdaten eine oder mehrere Arten von Informationen sind, ausgewählt aus der Gruppe, bestehend aus Qualität des regenerierten Kältemittels, Kältemittelzusammensetzung des regenerierten Kältemittels, Gewicht des regenerierten Kältemittels und einem Hinweis darauf, dass das regenerierte Kältemittel regeneriert worden ist.

11. Verfahren nach Anspruch 10, wobei sich die Qualität des regenerierten Kältemittels auf Informationen über die Angemessenheit von Öl, Feuchtigkeit und Säure im regenerierten Kältemittel bezieht; und/oder wobei die Regenerationsdaten Informationen in Verbindung mit einer Anlagen-ID und/oder einer Zylinder-ID umfassen.

12. Verfahren nach einem der Ansprüche 1-11, wobei ein Barcode zum Zweck der Identifizierung, Überwachung und Verfolgung verwendet wird.

13. Verfahren nach einem der Ansprüche 1-12, wobei das verwendete Kältemittel mindestens einen Stabilisator umfasst, bevorzugter mindestens eine Inhibitorverbindung, die die Bildung von Dimeren, Oligomeren, Homopolymeren oder polymeren Produkten hemmt.

14. Verfahren nach einem der Ansprüche 1-13, wobei das Verfahren weiter Hinzufügen mindestens eines Stabilisators zu dem verwendeten Kältemittel als Teil der Rückgewinnung des verwendeten Kältemittels umfasst, wobei der mindestens eine Stabilisator eine Inhibitorverbindung ist, die die Bildung von Dimeren, Oligomeren, Homopolymeren oder polymeren Produkten hemmt.

## Revendications

1. Procédé de gestion de valorisation de réfrigérant, comprenant :
le renvoi du réfrigérant usagé vers une installation pour la valorisation ;
l'identification, via une unité d'analyseur, du type du réfrigérant usagé ;
l'analyse, via l'unité d'analyseur, de la composition du réfrigérant usagé ;
la détermination, via l'unité d'analyseur, de la pureté du réfrigérant usagé ;
la détermination du poids du réfrigérant usagé sur la base de la pureté du réfrigérant usagé ;
sur la base du type et de la pureté du réfrigérant usagé, par une seule entité, le transfert du réfrigérant usagé vers un système consistant essentiellement en : un réservoir de collecte de gaz purs pour le stockage, un réservoir de collecte de gaz impurs pour un processus de valorisation, ou un réservoir de collecte de gaz mélangés pour un processus d'ajustement ; dans lequel :
si le réfrigérant usagé contient du gaz pur, le réfrigérant usagé est traité sur site et testé selon des normes industrielles,
si le réfrigérant usagé contient des impuretés non volatiles, le réfrigérant usagé est traité sur site pour être valorisé et testé selon des normes industrielles, et après le processus de valorisation, le réfrigérant usagé est conditionné, recertifié et considéré comme un nouveau réfrigérant valorisé, correspondant à un gaz pur, et
si le réfrigérant usagé contient des gaz mélangés, le réfrigérant usagé est traité sur site ou hors site pour le processus d'ajustement ; et
la génération d'un crédit de dépôt utilisable sur site ou à distance.

2. Procédé selon la revendication 1, dans lequel :
(i) si le gaz est déterminé comme étant pur (> 99,5 %) et d'un seul type par l'unité d'analyseur, le réfrigérant usagé est collecté et transféré vers [[a]] le réservoir de collecte de gaz purs contenant du réfrigérant pur ;
(ii) si le gaz est déterminé comme présentant une pureté supérieure à 98 %, (a) si le poids du réfrigérant usagé est inférieur à un seuil prédéterminé, le crédit de dépôt est sous forme d'argent, ou (b) si le poids du réfrigérant usagé est supérieur au seuil prédéterminé, le crédit de dépôt est sous forme d'argent ou de réfrigérant gratuit ;
(iii) si l'unité d'analyseur détermine que le réfrigérant usagé est un gaz mélangé qui contient des gaz mixtes ou présente une pureté de < 99,5 %, le réfrigérant usagé est collecté dans le réservoir de collecte de gaz mélangés et transporté vers une installation centrale pour être retraité par un régénérateur afin d'ajuster les gaz mixtes ; ou
(iv) si l'unité d'analyseur détermine que le réfrigérant usagé présente une pureté inférieure à 99,5 % mais supérieure à 98 %, le réfrigérant usagé est collecté et transféré vers le réservoir de collecte de gaz impurs contenant du réfrigérant impur.

3. Procédé selon l'une quelconque des revendications 1-2, dans lequel le crédit de dépôt est basé sur un poids du gaz pur.

4. Procédé selon l'une quelconque des revendications 1-3, dans lequel le réfrigérant usagé est choisi parmi le groupe consistant en R-410A, R-407A, R-407B, R-407C, R-407D, R-407E, R-407F, R-407G, R-407H et R-404A. R448A, R449A, R513A, R454A, R454B et R454C, R514A, R515B, R444A, R463A.

5. Procédé selon l'une quelconque des revendications 1-4, dans lequel si l'unité d'analyse constate que le réfrigérant usagé contient des impuretés non volatiles, le réfrigérant usagé est transféré et collecté dans le réservoir de collecte de gaz impurs pour être retraité par un régénérateur en vue d'un processus de valorisation et testé pour répondre aux spécifications de pureté de la norme AHRI-700.

6. Procédé selon la revendication 5, dans lequel les impuretés non volatiles sont choisies parmi le groupe consistant en l'huile, l'eau, les saletés et l'acide.

7. Procédé selon l'une quelconque des revendications 1-6, dans lequel l'unité d'analyseur est un dispositif portable ou un dispositif tenu en main.

8. Procédé selon la revendication 7, dans lequel l'unité d'analyseur est un capteur optique infrarouge.

9. Procédé selon l'une quelconque des revendications 1-8, comprenant en outre la régénération du réfrigérant usagé par un régénérateur incluant un système informatique configuré pour exécuter le traitement de régénération et créer des données de régénération.

10. Procédé selon la revendication 9, dans lequel les données de régénération sont un ou plusieurs types d'informations choisis parmi le groupe consistant en la qualité du réfrigérant régénéré, la composition de réfrigérant du réfrigérant régénéré, le poids du réfrigérant régénéré et une indication que le réfrigérant régénéré a été régénéré.

11. Procédé selon la revendication 10, dans lequel la qualité du réfrigérant régénéré est liée à des informations sur la pertinence de l'huile, de l'humidité et de l'acide dans le réfrigérant régénéré ; et/ou dans lequel les données de régénération comprennent des informations associées à un ID d'installation et/ou un ID de cylindre.

12. Procédé selon l'une quelconque des revendications 1-11, dans lequel un code-barres est utilisé à des fins d'identification, de surveillance et de suivi.

13. Procédé selon l'une quelconque des revendications 1-12, dans lequel le réfrigérant usagé comprend au moins un stabilisant, plus préférentiellement au moins un composé inhibiteur qui inhibe la formation de dimères, d'oligomères, d'homopolymères ou de produits polymères.

14. Procédé selon l'une quelconque des revendications 1-13, le procédé comprenant en outre l'ajout d'au moins un stabilisant au réfrigérant usagé dans le cadre de la valorisation du réfrigérant usagé, le au moins un stabilisant étant un composé inhibiteur qui inhibe la formation de dimères, d'oligomères, d'homopolymères ou de produits polymères.
